# EUROPEAN PATENT APPLICATION

(11) **EP 4 790 364 A1**
(43) Date of publication of application: **12.08.2026**
(21) Application number: 26156492.6
(22) Date of filing: 05.02.2026
(51) Int. Cl.: G01C 19/00, G01C 23/00, G01C 3/00, G01C 21/00

(54) **METHOD AND SYSTEM FOR AUTOMATED CONTAINER CHASSIS STACK CONFIGURATION DETERMINATION AND REPORTING**

(30) Priority: 06.02.2025 US 202519047466
(71) Applicant: BlackBerry Limited, Waterloo, Ontario N2K 0A7 (CA)
(72) Inventor: JANTZI, Jason Wayne, Waterloo, ON, N2K 0A7 (CA); FULESHWAR PRASAD, Mahendra, Waterloo, ON, N2K 0A7 (CA); OVERTON, Kelley Dean, Waterloo, ON, N2K 0A7 (CA)
(74) Representative: MERH-IP Matias Erny Reichl Hoffmann Patentanwälte PartG mbB

(57) **Abstract**

An electronic device for mounting to a transport chassis to transmit transport chassis stacking configuration information. The electronic device comprises a radio transceiver; an accelerometer and gyro; an altimeter; a memory; a processor; and an application stored in the memory that, when executed by the processor determines an orientation of the transport chassis as one of a rightside-up orientation or an upside-down orientation based on information received from the accelerometer and gyro, determines an elevation of the transport chassis based on information received from the accelerometer and gyro, and transmits the orientation of the transport chassis and the elevation of the transport chassis via the radio transceiver to a server application executing remote from the electronic device, whereby the server application is enabled to determine a configuration of a stack of transport chassis, wherein the stack of transport chassis includes the transport chassis to which the electronic device is mounted.

## Description

### CROSS-REFERENCE TO RELATED APPLICATIONS

None.

### STATEMENT REGARDING FEDERALLY SPONSORED RESEARCH OR DEVELOPMENT

Not applicable.

### REFERENCE TO A MICROFICHE APPENDIX

Not applicable.

### BACKGROUND

Electronic devices may be mounted to transport chassis to determine a location of the transport chassis and report that location to an application, whereby the application is able to track the location of the transport chassis and other like equipped transport chassis. This information may be made available to freight shippers and/or transportation companies. The transport chassis may be configured to accept intermodal shipping containers such that containers on a container ship arrived in port may be moved onto the transport chassis, and the transport chassis driven by a tractor or truck cab to a final destination of the container. Such containers may also be transported on train cars to a railyard, the container removed from the train car, moved from the train car onto the transport chassis, and the transport chassis driven by a tractor or truck cab to a final destination of the container. Containers can likewise be picked up and installed on a transport chassis, driven by a tractor or truck cab to a railyard or port, the container removed from the transport chassis, and the container placed upon a train car or on a container ship for transport.

### SUMMARY

In an embodiment, an electronic device for mounting to a transport chassis to transmit transport chassis stacking configuration information is disclosed. The electronic device comprises a radio transceiver; an accelerometer and gyro; an altimeter; a memory; a processor communicatively coupled to the memory, to the radio transceiver, to the accelerometer and gyro, and to the altimeter; and an application stored in a non-transitory portion of the memory. When executed by the processor, the application determines an orientation of the transport chassis as one of a rightside-up orientation or an upside-down orientation based on information received from the accelerometer and gyro, determines an elevation of the transport chassis based on information received from the altimeter, and transmits the orientation of the transport chassis and the elevation of the transport chassis via the radio transceiver to a server application executing remote from the electronic device, whereby the server application is enabled to determine a configuration of a stack of transport chassis, wherein the stack of transport chassis includes the transport chassis to which the electronic device is mounted.

In another embodiment, a first electronic device for mounting to a first transport chassis to transmit transport chassis stacking configuration information is disclosed. The first electronic device comprises a first radio transceiver; a second radio transceiver; an accelerometer and gyro; an altimeter; a memory; a processor communicatively coupled to the memory, to the radio transceiver, to the accelerometer and gyro, and to the altimeter; and an application stored in a non-transitory portion of the memory. When executed by the processor, the application determines an orientation of the first transport chassis as one of a rightside-up orientation or an upside-down orientation based on information received from the accelerometer and gyro, determines an elevation of the first transport chassis based on information received from the accelerometer and gyro, establishes wireless communication with a plurality of other electronic devices via the first radio transceiver, wherein each of the plurality of other electronic devices is mounted to another transport chassis different from the first transport chassis, wherein the other transport chassis and the first transport chassis are disposed in a transport chassis stacking configuration, receives orientation information via the first radio transceiver from each of the other electronic devices about the orientation of the transport chassis that the other electronic device is mounted to, and receives elevation information via the first radio transceiver from each of the other electronic devices about the elevation of the transport chassis that the other electronic device is mounted to. The application further, based on the orientation of the first transport chassis, based on the orientations of the other transport chassis, based on the elevation of the first transport chassis, and based on the elevations of the other transport chassis, determines a configuration of the stack of transport chassis, and transmits the configuration of the stack of the transport chassis via the second radio transceiver to a server application executing remote from the first electronic device.

In yet another embodiment, a method of determining a transport chassis stacking configuration is disclosed. The method comprises determining by an application executing on a processor an orientation of each of a plurality of transport chassis in a stacked configuration, wherein the orientation is one of a rightside-up orientation or an upside-down configuration; determining by the application an elevation of each of the transport chassis; determining by the application a count of transport chassis in the transport chassis stack; and determining by the application based on the orientation of each of the transport chassis and based on the elevation of each of the transport chassis a transport chassis stacking configuration of the transport chassis as one of a road stacking configuration and a park stacking configuration.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1A is an illustration of a plurality of transport chassis in a park staking configuration according to an embodiment of the disclosure.
FIG. 1B is an illustration of a plurality of transport chassis in a road staking configuration according to an embodiment of the disclosure.
FIG. 2 is a block diagram of an electronic device according to an embodiment of the disclosure.
FIG. 3A is a block diagram of system that determines and reports transport chassis stacking configuration information according to an embodiment of the disclosure.
FIG. 3B is another block diagram of the system that determines and reports transport chassis stacking configuration information according to an embodiment of the disclosure.
FIG. 4 is a flow chart of a method according to an embodiment of the disclosure.
FIG. 5 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

The present disclosure teaches a system and methods to automatically determine a configuration of stacked transport chassis. A transport chassis may be referred to with different terms such as a container chassis, an intermodal chassis, or a skeletal trailer. The transport chassis is a kind of semi-trailer designed to receive and carry intermodal shipping containers. In the transportation of intermodal shipping containers, it is desirable to minimize the idle time of containers while enroute to a final destination. To this end, it is desirable to closely track on-location and off-location inventory of transport chassis. For example, it is desirable for a railyard operator to accurately determine if the number of containers carried by an in-bound freight train that are to be unloaded at the railyard matches to or is exceeded by a number of transport chassis on hand in the railyard. It is desirable to accurately determine how many truck drivers are needed to hitch-up to the transport chassis after they are loaded with containers to drive the containers promptly to their shipping destination.

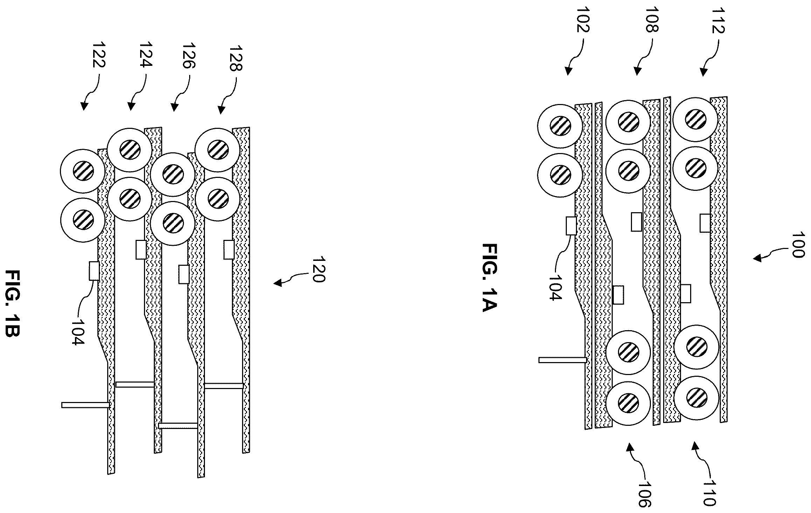

Transport chassis may be stacked to save space when parked at a railyard or at a port. A chassis park stacking configuration may comprise up to five transport chassis stacked together. A first chassis may have its wheels on the ground in a rightside-up orientation. A second chassis may be stacked upside down on top of the first chassis, flipped upside down, with its wheels at an opposite end of the stack of chassis from the wheels of the first chassis. A third chassis may be stacked rightside-up on top of the second chassis, with its wheels at an opposite end of the stack from the wheels of the second chassis. A fourth chassis may be stacked upside down on top of the third chassis, with its wheels at an opposite end of the stack of chassis from the wheels of the third chassis. A fifth chassis may be stacked rightside up on top of the fourth chassis, with its wheels at an opposite end of the stack from the wheels of the fourth chassis. See FIG. 1A for an illustration of a chassis park stacking configuration.

Transport chassis may be stacked for dead-headed transportation back to a railyard or to a port. A chassis road stacking configuration may comprise up to four transport chassis. A first chassis may have its wheels on the ground in a rightside up orientation. A second chassis may be stacked rightside up on top of the first chassis. A third chassis may be stacked rightside up on top of the second chassis. A fourth chassis may be stacked rightside up on top of the third chassis. See FIG. 1B for an illustration of a chassis road stacking configuration. This road stacking configuration is suitable for a tractor or cab hitching up to the first chassis and driving the road stacked four transport chassis to a use point (e.g., to a railyard or a port). It is understood that the chassis park stacking and chassis road stacking configurations may be known by different names in different operating regions.

Currently, an operator of a railyard may need to send a worker to one or more chassis stacks out in the railyard to count the transport chassis arranged in a chassis park stacking configuration and to record their configuration. This may involve determining and recording the serial number or other unique identity of the transport chassis. The worker than would report back their recording to the railyard operator (the terminal building or main office building), and this information may be entered into a record system or computer for processing. This process is subject to human error and entails the cost and time lags associated with a manual process performed, at least partly, by a human worker. A like manual process may be used by a port operator to count transport chassis arranged in a chassis park stacking configuration and to record their configuration. A similar manual process may be employed by a trucking company to count transport chassis arranged in a chassis road stacking configuration and to record their configuration. The present disclosure teaches a particular technical solution to the technical problem of determining transport chassis inventory at different sites.

In accordance with the novel teachings of the present disclosure, each transport chassis may have an electronic device mounted to the structure of the chassis. In some contexts, the electronic device may be referred to as a radar gateway device or as an asset tracking device. The electronic device may comprise one or more radio transceiver, an accelerometer and gyro, an altimeter, an optional radar ranging sensor (e.g., a mmWave radar sensor), a memory, a processor, and an application stored in the memory that may be executed by the processor. The application can analyze information produced by the accelerometer and gyro to determine an orientation of the transport chassis to which the electronic device is mounted. The application can analyze information produced by the altimeter to determine an elevation of the transport chassis to which the electronic device is mounted. The electronic device can transmit the orientation and elevation information via the radio transceiver to a dashboard application executing on a computer system that analyzes the information, along with like information from like electronic devices mounted to other transport chassis in the same chassis stack, to determine the count of chassis and the configuration of the chassis in the given chassis stack. The dashboard application can then provide access to this information to railyard operators and/or port operators. In an embodiment, the optional mmWave radar sensor may determine a distance between a given chassis and a neighboring chassis, and this distance information can be used to determine the chassis stacking configuration.

In an embodiment, the electronic devices mounted to chassis in a chassis stack may establish a short-range wireless network and intercommunicate with each other. These electronic devices may be able to distinguish the chassis co-located in a chassis stack from other electronic devices associated with chassis in a separate chassis stack because the separate chassis stack may be outside the range of the short-range wireless network and hence do not participate in the network. These electronic devices in the chassis stack may share their orientation and elevation information, and one of the electronic devices may assume a leadership or master role. The master electronic device may analyze the information provided by all the electronic devices in the chassis stack to determine the count of chassis in the chassis stack and to determine the configuration of the chassis stack. The master electronic device may then transmit the count of chassis and chassis stack configuration information via a cellular radio transceiver to a dashboard application executing on a computer system, and the dashboard can provide access to this information to railyard operators and/or port operators.

Turning now to FIG. 1A, a park stacking configuration of transport chassis 100 is described. In an embodiment, the park stacking configuration of transport chassis 100 comprises up to five transport chassis. As illustrated in FIG. 1A, the park stacking configuration of transport chassis 100 comprises a first transport chassis 102, a second transport chassis 106, a third transport chassis 108, a fourth transport chassis 110, and a fifth transport chassis 112. Each of the transport chassis 101, 106, 108, 110, 112 has an electronic device 104 mounted to the transport chassis. While mounted in a specific location on the transport chassis in FIG. 1A, the electronic device 104 may be mounted to the transport chassis in different locations. In an embodiment, the park stacking configuration of transport chassis 100 may have fewer than five transport chassis. In an embodiment, the park stacking configuration of transport chassis 100 may have more than five transport chassis but fewer than twenty transport chassis.

In the park stacking configuration of transport chassis 100, some of the transport chassis are oriented upside down (e.g., chassis 106 and chassis 110) and the others of the transport chassis are oriented rightside up (e.g., chassis 102, 108, 112). The transport chassis which are in upside down orientation have their wheels disposed at an opposite end of the park stacking configuration of transport chassis 100 (e.g., disposed at the right side) from the end of the parking stacking configuration of transport chassis 100 where the wheels of the transport chassis in rightside up orientation (e.g., disposed at the left side).

Turning now to FIG. 1B, a road stacking configuration of transport chassis 120 is described. In an embodiment, the road stacking configuration of transport chassis 120 comprises up to four transport chassis. As illustrated in FIG. 1B, the road stacking configuration of transport chassis 120 comprises a sixth transport chassis 122, a seventh transport chassis 124, an eighth transport chassis 126, and a ninth transport chassis 128. Each of the transport chassis 122, 124, 126, 128 has an electronic device 104 mounted to the transport chassis. The electronic device 104 may be mounted at a different location than the positions illustrated in FIG. 1B. In an embodiment, the road stacking configuration of transport chassis 120 may have fewer than four transport chassis. In an embodiment, the road stacking configuration of transport chassis 120 may have more than four transport chassis and less than ten transport chassis. In the road stacking configuration, the transport chassis 122, 124, 126, 128 are all oriented rightside up. The positions of the transport chassis 124, 126, 128 may be staggered as illustrated to allow wheels to nest layer-to-layer.

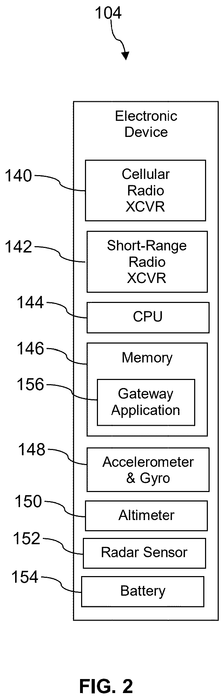

Turning now to FIG. 2, the electronic device 104 is described. As mentioned before, in some contexts, the electronic device 104 may be referred to by other terms such as a radar gateway device or an asset tracking device. In an embodiment, the electronic device 104 comprises a cellular radio transceiver 140, a short-range radio transceiver 142, a processor 144, a memory 146, an accelerometer and gyro 148, an altimeter 150, optionally a radar sensor 152, and a battery 154. In an embodiment, a non-transitory portion of the memory 146 stores a gateway application 156. The cellular radio transceiver 140 may be configured to establish a wireless communication link with a cell site according to a 6G, a 5G, a Long-Term Evolution (LTE), a Code Division Multiple Access (CDMA), a Global System for Mobile communication (GSM), an Enhanced Data rates for GSM Evolution (EDGE), and/or a Universal Terrestrial Radio Access Network (UTRAN) telecommunications protocol.

The short-range radio transceiver 142 may be configured to establish a wireless communication link according to a Bluetooth, a WiFi, a ZigBee, a Bluetooth Low Energy (BLE), an IEEE 801.15, or other short-range wireless communication protocol. In an embodiment, the short-range radio transceiver 142 may be able to establish a wireless link with another radio at a distance of a maximum of 200 feet, a maximum of 150 feet, a maximum of 100 feet, a maximum of 75 feet, a maximum of 50 feet, a maximum of 40 feet, a maximum of 35 feet, or some other maximum range less than 300 feet. By contrast, in an embodiment, the cellular radio transceiver 140 may be able to establish a wireless link with a cell site at a distance of a maximum of 20 miles, a maximum of 15 miles, a maximum of 10 miles, a maximum of 7 miles, a maximum of 5 miles, a maximum of 3 miles, or some other maximum range greater than 1 mile. In an embodiment, some instances of the electronic device 104 may have only the short-range radio transceiver 142 and may not have the cellular radio transceiver 140.

The processor may comprise one or more microprocessor, microcontroller, digital signal processor (DSP), application specific integrated circuit (ASIC), field programmable gate array (FPGA), or other forms of semi-conductor implemented logic processors. In an embodiment, the processor 144 is communicatively coupled to the cellular radio transceiver 140, the short-range radio transceiver 142, the memory 146, the accelerometer and gyro 148, the altimeter 150, and the optional radar sensor 152. The battery 154 may be coupled to each of the components 140, 142, 144, 146, 148, 150, 152 of the electronic device 104, whereby to provide electric power to those components. The battery 154 may be a replaceable battery and/or a rechargeable battery. In an embodiment, the electronic device 104 further comprises circuitry to recharge the battery 154 from an external source of power.

The accelerometer and gyro 148 may be a multi-axis accelerometer. The accelerometer and gyro 148 may comprise 3-axis accelerometer and a 3-axis gyro scope. The accelerometer and gyro 148 may output a signal for each axis of acceleration and a signal from each axis or rotation that can be analyzed by the processor 144. Alternatively, the accelerometer and gyro 148 may analyze the indications of its axes, generate a single signal or digital message that represents the combination of the separate acceleration indications of the multiple axes, and transmit the signal or message to the processor 144. The altimeter 150 outputs a signal that can be analyzed by the processor 144 to determine an elevation of the electronic device 104 (and by implication the elevation of the transport chassis to which the electronic device 104 is mounted). Alternatively, the altimeter 150 analyzes indications of elevation, generates a signal or message that represents the elevation determined by the altimeter 150, and transmits the signal or message to the processor 144. In an embodiment, the altimeter 150 senses air pressure and provides elevation information that is based on the sensed air pressure. In an embodiment, the altimeter 150 may send raw sensor data that must be converted by the processor 144 and/or by the gateway application 156 to an equivalent elevation. Alternatively, in another embodiment, the altimeter 150 may convert pressure sensor data to an equivalent or related elevation and output the elevation information. The altimeter 150 may be said in some contexts to sense barometric pressure. The optional radar sensor 152 may employ a mmWave transceiver to determine a distance between the electronic device 104 and a proximate surface, such as an adjacent transport chassis. The radar sensor 152 may send an indication of the distance to the processor 144.

In an embodiment, the electronic unit 104 determines a location of the electronic unit 104 that serves as a proxy for the location of the transport chassis to which the electronic unit 104 is mounted. In an embodiment, the electronic unit 104 may comprise a global navigation satellite system (GNSS) chip or a global positioning system (GPS) chip that determines location based on signals received from satellites, and the GNSS chip or GPS chip may provide the location of the electronic unit 104. In another embodiment, the electronic unit 104 may determine its location using triangulation location techniques based on received signal strength of radio signals received by the cellular radio transceiver 140 from a plurality of cell sites. The electronic unit 104 may rely on GNSS chip or GPS chip location information at some times and rely on cell site triangulation techniques to locate itself at other times. In some circumstances, for example when the electronic unit 104 is mounted to a transport chassis that is disposed under one or more other transport chassis (as may happen when in a transport chassis stack), signals from satellites may be unavailable to the GNSS chip or GPS chip and in this circumstance the chip may be unable to determine location.

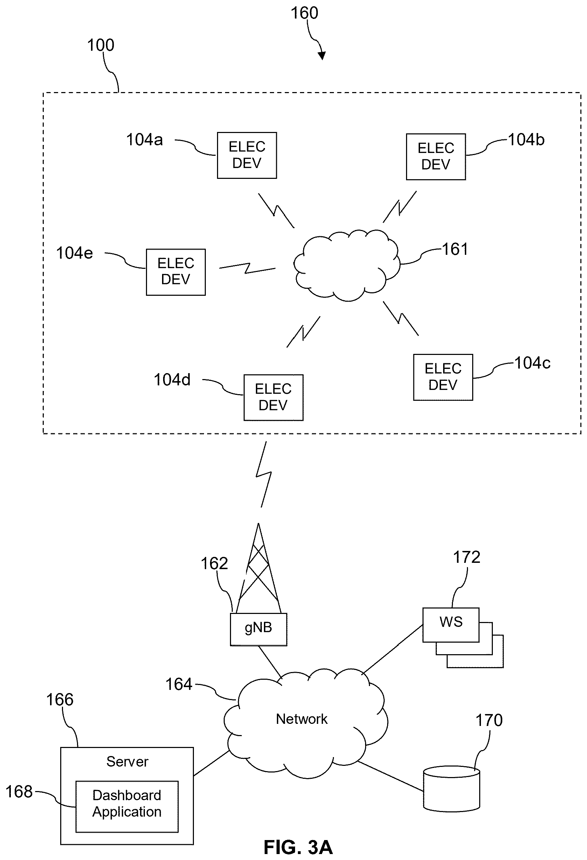

Turning now to FIG. 3A, a system 160 is described. The system 160 comprises the park stacking configuration of transport chassis 100 illustrated in FIG. 1A. The system 160 comprises a first electronic device 104a mounted to the first transport chassis 102, a second electronic device 104b mounted to the second transport chassis 106, a third electronic device 104c mounted to the third transport chassis 108, a fourth electronic device 104d mounted to the fourth transport chassis 110, and a fifth electronic device 104e mounted to the fifth transport chassis 112. The electronic devices 104a, 104b, 104c, 104d, 104e may establish a short-range wireless network 161 via their short-range radios 142. In an embodiment, the short-range wireless network 161 is a mesh network where each electronic device 104a, 104b, 104c, 104d, 104e may wirelessly communicate directly with any of the other electronic devices 104a, 104b, 104c, 104d, 104e. Alternatively, in another embodiment, the short-range wireless network 161 may be a hub-and-spoke network where one electronic device, for example the third electronic device 104d, operates as a hub of the short-range wireless network 161 and other electronic devices wirelessly communicate via the electronic device operating as the hub (e.g., electronic device 104d).

The electronic devices 104a, 104b, 104c, 104d, 104e are able to distinguish electronic units 104 mounted to transport chassis in their park stacking configuration of transport chassis 100 from transport chassis disposed outside of their transport chassis stack - both individual transport chassis and transport chassis disposed in a different transport chassis stack. In some cases, the short-range radio transceivers 142 may not receive any radio signals from proximate electronic devices 104 attached to transport chassis outside of their own transport chassis stack, due to the maximum range limitation of the short-range radio 142. In other cases, the short-range radio transceivers 142 are able distinguish electronic devices 104 in their own transport chassis stack from other electronic devices 104 attached to transport chassis located outside their own transport chassis stack by a determination of received signal strength of the short-range radios 142 of electronic units 104 mounted to transport chassis located outside of their own transport chassis stack are below a predefined threshold received signal strength value.

At least one of the electronic devices 104a, 104b, 104c, 104d, 104e has a cellular radio transceiver 140 and is able to establish a cellular radio link with a cell site 162. As illustrated in FIG. 3A, fourth electronic device 104d has established a cellular communication link with the cell site 162, but it is understood others of the electronic devices 104a, 104b, 104c, 104e may also be able to establish a cellular communication link with the cell site 162 or with a different cell site. The cell site 162 is communicatively coupled to a network 164, and the cell site 162 provides communication coupling between the network 164 and the cellular radio transceiver 140 of one or more of the electronic devices 104a, 104b, 104c, 104d, 104e. The network 164 comprises one or more private networks, one or more public networks, or a combination thereof.

In an embodiment, a computer (server) 166 is communicatively coupled to the network 164 and is communicatively coupled, via the network 164, to a data store 170. The computer 166 executes a dashboard application 168. In an embodiment, the computer 166 may be provided by a cloud computing provider as leased computing resources, such as Amazon Web Services (AWS). The dashboard application 168 may execute on a virtual server in a cloud computing environment. In an embodiment, the data store 170 may be provided by a cloud computing provider as leased storage resources.

Each of the electronic devices 104a, 104b, 104c, 104d, 104e is able to sense the orientation and the elevation of the transport chassis to which it is attached. For example, each electronic device 104a, 104b, 104c, 104d, 104e is able to determine whether the transport chassis to which it is mounted is oriented rightside-up (e.g., oriented as transport chassis 102, 108, and 112 in FIG. 1A) or is oriented upside-down (e.g., oriented as transport chassis 106 and 110 in FIG. 1A). In a rightside-up orientation, a transport chassis has its wheels on an underside or downwards of a frame or bed of the transport chassis; and in an upside-down orientation, a transport chassis has its wheels above or upwards from a frame or bed of the transport chassis.

The information about orientation and elevation of transport chassis from each of the electronic devices 104a, 104b, 104c, 104d, 104e can be analyzed to determine a count of transport chassis in the transport chassis stack and to determine a stacking configuration of the transport chassis stack. In an embodiment, this analysis may be performed by one or more of the electronic devices 104a, 104b, 104c, 104d, 104e. The electronic device 104d may then transmit the count and transport chassis stack configuration information via the cellular radio transceiver 140, via the cell site 162, via the network 164 to the computer 166. The count and transport chassis stack configuration information can also include identifications of the transport chassis, for example serial numbers of the transport chassis and/or license tags of the transport chassis. The count and the transport chassis stack configuration information can also include a location of the electronic device 104a, 104b, 104c, 104d, 104e (e.g., the location serves as a proxy for the location of the electronic device and hence a proxy for the location of the transport chassis stack). The dashboard application 168 can store this count and stack configuration information in the data store 170 and make this information available to users. It will be appreciated that the dashboard application 168 may be receiving count and transport chassis stack configuration information from transport chassis stacks disposed in many different locations (e.g., in railyards, in ports, in trucking depots, and along the roadways and highways), and thus the information stored in the data store 170 may provide a comprehensive information on location and disposition of a great number of transport chassis over a wide area or region.

In an embodiment, the system 160 comprises a plurality of user workstations 172. Users can use the workstations 172 to log into a user interface of the dashboard application 168 to determine counts of transport chassis and transport chassis stack configurations at different railyards and/or ports. The information and access by users via the workstations 172 to the dashboard application 168 promotes improved coordination among container ships, railroad operators, and transport chassis and trucking companies, whereby to minimize delays of transporting intermodal containers via transport chassis. Shortages of transport chassis sometimes develop in particular locations, and the system 160 described herein can help avert and avoid such shortages.

In another embodiment, however, the information about orientation and elevation (and optionally count and location information) of transport chassis from each of the electronic devices 104a, 104b, 104c, 104d, 104e can be transmitted by the fourth electronic device 104d via the cellular communication link to the cell site 162, via the cell site to the network 164, and via the network 164 to the computer 166. Then the dashboard application 168 can analyze the collected information to determine counts of transport chassis in a stack and to determine a stacking configuration.

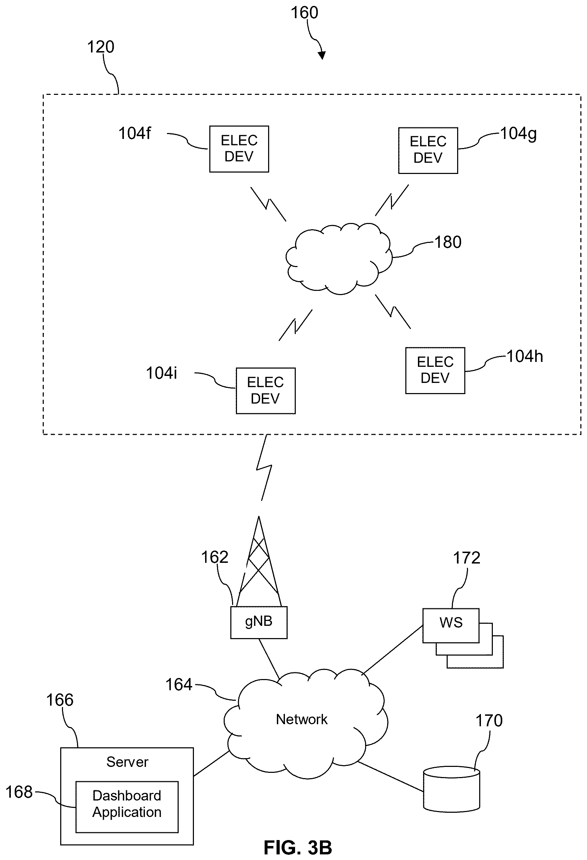

Turning now to FIG. 3B, the system 160 further comprises the road stacking configuration of transport chassis 120. The operation of the system 160 is substantially similar to that described with reference to FIG. 3A above, just that in FIG. 3B the transport chassis are arranged in a road stacking configuration. The system 160 comprises a sixth electronic device 104f mounted to the sixth transport chassis 122, a seventh electronic device 104g mounted to the seventh transport chassis 124, an eighth electronic device 104h mounted to the eighth transport chassis 126, and a ninth electronic device 104i mounted to the ninth transport chassis 128. The electronic devices 104f, 104g, 104h, 104i may establish a short-range wireless network 180 via their short-range radios 142. In an embodiment, the short-range wireless network 180 is a mesh network where each electronic device 104f, 104g, 104h, 104i may wirelessly communicate directly with any of the other electronic devices 104f, 104g, 104h, 104i. Alternatively, in another embodiment, the short-range wireless network 180 may be a hub-and-spoke network where one electronic device, for example the ninth electronic device 104i, operates as a hub of the short-range wireless network 180 and other electronic devices wirelessly communicate via the electronic device operating as the hub (e.g., electronic device 104i).

The electronic devices 104f, 104g, 104h, 104i are able to distinguish electronic units 104 mounted to transport chassis in their road stacking configuration of transport chassis 100 from transport chassis disposed outside of their transport chassis stack - both stacked transport chassis and unstacked, individual transport chassis. As described above, the electronic devices 104f, 104g, 104h, 104i are able to collect elevation and orientation information. One of the electronic devices 104f, 104g, 104h, 104h may analyze this elevation and orientation information, determine a count and stacking configuration of the transport chassis to which the electronic devices 104f, 104g, 104h, 104i are mounted, and send this count and stacking configuration determination via a cellular communication link to the cell site, via the network 164, to the computer 166 and the dashboard application 168. The one of the electronic devices 104f, 104g, 104h, 104i may also send transport chassis identification information and location information via the cellular communication link to the dashboard application 168 in the same way. The dashboard application 168 may store the information provided in the data store 170.

It will be appreciated that the system and methods disclosed may take a variety of different forms than as described above. For example, in an embodiment, the system 160 may produce a count of transport chassis in a stack of transport chassis without further determining whether the transport chassis are disposed in a road stacking configuration or a park stacking configuration. The raw count of transport chassis in the stack of transport chassis can be useful and beneficial even without specifically identifying the stack as being a park stacking configuration or a road stacking configuration. Additionally, in an embodiment, the electronic device 104 may comprise only a single radio transceiver. The single radio transceiver may be a short-range radio transceiver. The electronic device 104, in this embodiment of a single radio transceiver, may simply off-load information relevant to count determination and stacking configuration via the short-range radio transceiver to a hand-held device employed by a worker located in a port or in a railyard. The electronic device 104, in this embodiment of a single radio transceiver, may off-load the count and the determined stacking configuration via the short-range radio to a hand-held device. Alternatively, the single radio transceiver may be a cellular radio transceiver, and the electronic device 104 may off-load information relevant to count determination and stacking configuration information via the cellular radio transceiver to a computer system that does the determination of count and stacking configuration. Alternatively, the single radio transceiver may off-load the count and the determined stacking configuration via the cellular radio transceiver to a computer system (i.e., in this embodiment, the electronic unit does determines the count and the stacking configuration).

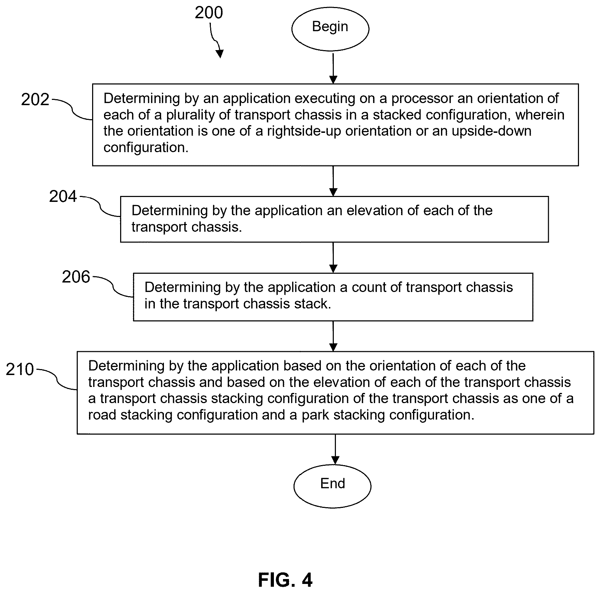

Turning now to FIG. 4, a method 200 is described. In an embodiment, the method 200 is a method of determining a transport chassis stacking configuration. At block 202, the method 200 comprises determining by an application executing on a processor an orientation of each of a plurality of transport chassis in a stacked configuration, wherein the orientation is one of a rightside-up orientation or an upside-down configuration.

At block 204, the method 200 comprises determining by the application an elevation of each of the transport chassis. At block 206, the method 200 comprises determining by the application a count of transport chassis in the transport chassis stack.

At block 210, the method 200 comprises determining by the application based on the orientation of each of the transport chassis and based on the elevation of each of the transport chassis a transport chassis stacking configuration of the transport chassis as one of a road stacking configuration and a park stacking configuration.

In an embodiment, the processing of method 200 may be performed by the electronic unit 104. For example, one of a plurality of electronic units mounted to transport chassis disposed in a stack of transport chassis can receive information from the other electronic units in the stack of transport chassis and perform the processing of blocks 202-210. The electronic unit 104 can then transmit the count information and stacking configuration information to the computer 166 and the dashboard application 168.

In an embodiment, an electronic unit is mounted to each of the transport chassis of the plurality of transport chassis different from the first transport chassis, further comprising the first electronic unit establishing wireless communication links with each of the electrics units mounted to each of the transport chassis different from the first transport chassis, receiving by the application information about elevation from each of the electronic units mounted to each of the transport chassis different from the first transport chassis, receiving by the application information about orientation from each of the electronic units mounted to each of the transport chassis different from the first transport chassis. In an embodiment, the application determines the orientation of each of the transport chassis in the stacked configuration based on the information about orientation received by the application from each of the electronic units mounted to each of the transport chassis different from the first transport chassis and based on information about orientation of the first transport chassis received by the application from an accelerometer and gyro of the first electronic unit. In an embodiment, wherein the application determines the elevation of each of the transport chassis in the stacked configuration based on the information about elevation received by the application from each of the electronic units mounted to each of the transport chassis different from the first transport chassis and based on information about elevation of the first transport chassis received by the application from an altimeter of the first electronic unit.

In an embodiment, the application is executed on a computer located remote from the plurality of transport chassis, wherein the application determines the orientation of each transport chassis based on an output of an accelerometer and gyro in an electronic unit mounted on the transport chassis and determines the elevation of each transport chassis based on an output of an altimeter in the electronic unit mounted on the transport chassis.

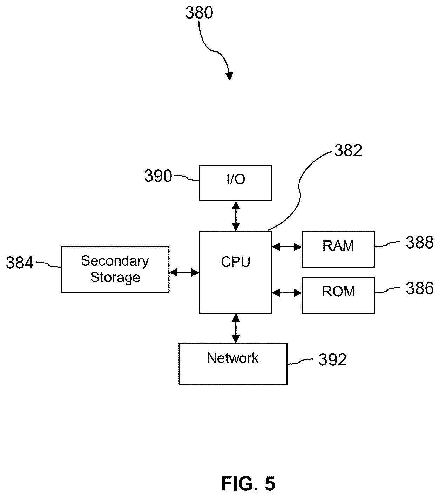

FIG. 5 illustrates a computer system 380 suitable for implementing one or more embodiments disclosed herein. In an embodiment, the computer 166 may be implemented in a form substantially similar to the computer system 380. In an embodiment, the workstations 172 may be implemented in a form substantially similar to the computer system 380. The computer system 380 includes a processor 382 (which may be referred to as a central processor unit or CPU) that is in communication with memory devices including secondary storage 384, read only memory (ROM) 386, random access memory (RAM) 388, input/output (I/O) devices 390, and network connectivity devices 392. The processor 382 may be implemented as one or more CPU chips.

It is understood that by programming and/or loading executable instructions onto the computer system 380, at least one of the CPU 382, the RAM 388, and the ROM 386 are changed, transforming the computer system 380 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 380 is turned on or booted, the CPU 382 may execute a computer program or application. For example, the CPU 382 may execute software or firmware stored in the ROM 386 or stored in the RAM 388. In some cases, on boot and/or when the application is initiated, the CPU 382 may copy the application or portions of the application from the secondary storage 384 to the RAM 388 or to memory space within the CPU 382 itself, and the CPU 382 may then execute instructions that the application is comprised of. In some cases, the CPU 382 may copy the application or portions of the application from memory accessed via the network connectivity devices 392 or via the I/O devices 390 to the RAM 388 or to memory space within the CPU 382, and the CPU 382 may then execute instructions that the application is comprised of. During execution, an application may load instructions into the CPU 382, for example load some of the instructions of the application into a cache of the CPU 382. In some contexts, an application that is executed may be said to configure the CPU 382 to do something, e.g., to configure the CPU 382 to perform the function or functions promoted by the subject application. When the CPU 382 is configured in this way by the application, the CPU 382 becomes a specific purpose computer or a specific purpose machine.

The secondary storage 384 is typically comprised of one or more disk drives or tape drives and is used for non-volatile storage of data and as an over-flow data storage device if RAM 388 is not large enough to hold all working data. Secondary storage 384 may be used to store programs which are loaded into RAM 388 when such programs are selected for execution. The ROM 386 is used to store instructions and perhaps data which are read during program execution. ROM 386 is a non-volatile memory device which typically has a small memory capacity relative to the larger memory capacity of secondary storage 384. The RAM 388 is used to store volatile data and perhaps to store instructions. Access to both ROM 386 and RAM 388 is typically faster than to secondary storage 384. The secondary storage 384, the RAM 388, and/or the ROM 386 may be referred to in some contexts as computer readable storage media and/or non-transitory computer readable media.

I/O devices 390 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 392 may provide wired communication links and/or wireless communication links (e.g., a first network connectivity device 392 may provide a wired communication link and a second network connectivity device 392 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB IoT), near field communications (NFC), radio frequency identity (RFID). The radio transceiver cards may promote radio communications using 5G, 5G New Radio, or 5G LTE radio communication protocols. These network connectivity devices 392 may enable the processor 382 to communicate with the Internet or one or more intranets. With such a network connection, it is contemplated that the processor 382 might receive information from the network, or might output information to the network in the course of performing the above-described method steps. Such information, which is often represented as a sequence of instructions to be executed using processor 382, may be received from and outputted to the network, for example, in the form of a computer data signal embodied in a carrier wave.

Such information, which may include data or instructions to be executed using processor 382 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 382 executes instructions, codes, computer programs, scripts which it accesses from hard disk, floppy disk, optical disk (these various disk-based systems may all be considered secondary storage 384), flash drive, ROM 386, RAM 388, or the network connectivity devices 392. While only one processor 382 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 384, for example, hard drives, floppy disks, optical disks, and/or other device, the ROM 386, and/or the RAM 388 may be referred to in some contexts as non-transitory instructions and/or non-transitory information.

In an embodiment, the computer system 380 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 380 to provide the functionality of a number of servers that is not directly bound to the number of computers in the computer system 380. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid-state memory chip, for example analog magnetic tape, compact disk read only memory (CD-ROM) disks, floppy disks, jump drives, digital cards, multimedia cards, and others. The computer program product may be suitable for loading, by the computer system 380, at least portions of the contents of the computer program product to the secondary storage 384, to the ROM 386, to the RAM 388, and/or to other non-volatile memory and volatile memory of the computer system 380. The processor 382 may process the executable instructions and/or data structures in part by directly accessing the computer program product, for example by reading from a CD-ROM disk inserted into a disk drive peripheral of the computer system 380. Alternatively, the processor 382 may process the executable instructions and/or data structures by remotely accessing the computer program product, for example by downloading the executable instructions and/or data structures from a remote server through the network connectivity devices 392. The computer program product may comprise instructions that promote the loading and/or copying of data, data structures, files, and/or executable instructions to the secondary storage 384, to the ROM 386, to the RAM 388, and/or to other non-volatile memory and volatile memory of the computer system 380.

In some contexts, the secondary storage 384, the ROM 386, and the RAM 388 may be referred to as a non-transitory computer readable medium or a computer readable storage media. A dynamic RAM embodiment of the RAM 388, likewise, may be referred to as a non-transitory computer readable medium in that while the dynamic RAM receives electrical power and is operated in accordance with its design, for example during a period of time during which the computer system 380 is turned on and operational, the dynamic RAM stores information that is written to it. Similarly, the processor 382 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. An electronic device for mounting to a transport chassis to transmit transport chassis stacking configuration information, comprising:
a first radio transceiver;
an accelerometer and gyro;
an altimeter;
a memory;
a processor communicatively coupled to the memory, to the first radio transceiver, to the accelerometer and gyro, and to the altimeter; and
an application stored in a non-transitory portion of the memory that, when executed by the processor
determines an orientation of the transport chassis as one of a rightside-up orientation or an upside-down orientation based on information received from the accelerometer and gyro,
determines an elevation of the transport chassis based on information received from the altimeter, and
transmits the orientation of the transport chassis and the elevation of the transport chassis via the first radio transceiver.

2. The electronic device of claim 1, wherein the first radio transceiver is a cellular radio transceiver.

3. The electronic device of claim 1 or 2,
wherein the first radio transceiver is configured to establish a wireless communication link according to a 6G, a 5G, a Long-Term Evolution (LTE), a Code Division Multiple Access (CDMA), a Global System for Mobile communication (GSM), an Enhanced Data rates for GSM Evolution (EDGE), or a Universal Terrestrial Radio Access Network (UTRAN) telecommunications protocol; or
wherein the electronic device further comprises a second radio transceiver, wherein the second radio transceiver is a short-range radio transceiver, wherein the second radio transceiver is configured to establish a mesh wireless network with other short-range radio transceivers of other electronic devices mounted to other transport chassis in the stack of transport chassis, and wherein the application, when executed by the processor, transmits identities of the other electronic devices or identities of the other transport chassis in the stack of transport chassis via the first radio transceiver to the server application executing remote from the electronic device, wherein optionally the second radio transceiver is configured to establish a wireless communication link according to a Bluetooth, a WiFi, a ZigBee, a Bluetooth Low Energy (BLE), or an IEEE 802.15 wireless communication protocol.

4. The electronic device of any one of claims 1 to 3, wherein the application, when executed by the processor, transmits the orientation of the transport chassis and the elevation of the transport chassis via the first radio transceiver to a server application executing remote from the electronic device, whereby the server application is enabled to determine a configuration of a stack of transport chassis, wherein the stack of transport chassis includes the transport chassis to which the electronic device is mounted.

5. The electronic device of any one of claims 1 to 4, further comprising a radar sensor, wherein the application, when executed by the processor, determines a distance between the transport chassis the electronic device is mounted to and another transport chassis in the stack of transport chassis based on information received from the radar sensor and transmits the distance.

6. A first electronic device for mounting to a first transport chassis to transmit transport chassis stacking configuration information, comprising:
a first radio transceiver;
an accelerometer and gyro;
an altimeter;
a memory;
a processor communicatively coupled to the memory, to the first radio transceiver, to the accelerometer and gyro, and to the altimeter; and
an application stored in a non-transitory portion of the memory that, when executed by the processor
determines a count of transport chassis in a stack of transport chassis that includes the first transport chassis, and
transmits the count of transport chassis in the stack of transport chassis via the first radio transceiver.

7. The first electronic device of claim 6, wherein the application, when executed by the processor, further:
determines an orientation of the first transport chassis as one of a rightside-up orientation or an upside-down orientation based on information received from the accelerometer and gyro,
determines an elevation of the first transport chassis based on information received from the altimeter,
establishes wireless communication with a plurality of other electronic devices, wherein each of the plurality of other electronic devices is mounted to another transport chassis different from the first transport chassis, wherein the other transport chassis and the first transport chassis in the stack of transport chassis are disposed in a transport chassis stacking configuration,
receives orientation information from each of the other electronic devices about the orientation of the transport chassis that the other electronic device is mounted to,
receives elevation information from each of the other electronic devices about the elevation of the transport chassis that the other electronic device is mounted to,
based on the orientation of the first transport chassis, based on the orientations of the other transport chassis, based on the elevation of the first transport chassis, and based on the elevations of the other transport chassis, determines a configuration of the stack of transport chassis, and
transmits the configuration of the stack of the transport chassis via the first radio transceiver.

8. The first electronic device of claim 7,
wherein the configuration of the stack of transport chassis is determined to be a road stacking configuration of transport chassis; or
wherein the configuration of the stack of transport chassis is determined to be a park stacking configuration of transport chassis.

9. The first electronic device of claim 7 or 8, further comprising a second radio transceiver, wherein the second radio transceiver is a short-range radio transceiver, wherein the application establishes wireless communication with the plurality of other electronic devices via the second radio transceiver, receives orientation information from each of the other electronic devices via the second radio transceiver, and receives elevation information from each of the other electronic devices via the second radio transceiver.

10. The first electronic device of any one of claims 6 to 9,
wherein the application, when executed by the processor, determines a location of the first electronic device and transmits the location of the first electronic device via the first radio transceiver;
wherein optionally, the first radio transceiver is a cellular radio transceiver and wherein the application determines the location of the first electronic device based on cell site triangulation information received by the first radio transceiver.

11. A method of determining a transport chassis stacking configuration, comprising:
determining by an application executing on a processor an orientation of each of a plurality of transport chassis in a stacked configuration, wherein the orientation is one of a rightside-up orientation or an upside-down configuration;
determining by the application an elevation of each of the transport chassis;
determining by the application a count of transport chassis in the transport chassis stack; and
determining by the application based on the orientation of each of the transport chassis and based on the elevation of each of the transport chassis a transport chassis stacking configuration of the transport chassis as one of a road stacking configuration and a park stacking configuration.

12. The method of claim 11,
wherein the application is executed on a computer located remote from the plurality of transport chassis, wherein the application determines the orientation of each transport chassis based on an output of an accelerometer and gyro in an electronic unit mounted on the transport chassis and determines the elevation of each transport chassis based on an output of an altimeter in the electronic unit mounted on the transport chassis; or
wherein the application is executed on a processor of a first electronic unit mounted to a first transport chassis of the plurality of transport chassis.

13. The method of claim 12, wherein when the application is executed on the processor of the first electronic unit mounted to the first transport chassis, an electronic unit is mounted to each of the transport chassis of the plurality of transport chassis different from the first transport chassis, further comprising the first electronic unit establishing wireless communication links with each of the electrics units mounted to each of the transport chassis different from the first transport chassis, receiving by the application information about elevation from each of the electronic units mounted to each of the transport chassis different from the first transport chassis, receiving by the application information about orientation from each of the electronic units mounted to each of the transport chassis different from the first transport chassis.

14. The method of claim 13,
wherein the application determines the orientation of each of the transport chassis in the stacked configuration based on the information about orientation received by the application from each of the electronic units mounted to each of the transport chassis different from the first transport chassis and based on information about orientation of the first transport chassis received by the application from an accelerometer and gyro of the first electronic unit; or
wherein the application determines the elevation of each of the transport chassis in the stacked configuration based on the information about elevation received by the application from each of the electronic units mounted to each of the transport chassis different from the first transport chassis and based on information about elevation of the first transport chassis received by the application from an altimeter of the first electronic unit.

15. A computer-readable medium having instructions stored thereon that, when executed by a computing device, cause the computing device to perform method according to any one of claims 11 to 14.
